# EUROPÄISCHE PATENTSCHRIFT

(11) **EP 2 261 080 B1**
(45) Veröffentlichungstag und Bekanntmachung des Hinweises auf die Patenterteilung: **18.01.2012**
(21) Anmeldenummer: 09007526.8
(22) Anmeldetag: 08.06.2009
(51) Int. Cl.: B60P 3/40, F03D 1/00

(54) **Selbstfahrendes Schwerlastmodultransportfahrzeug zum Anheben und aufrechten Transportieren eines Fundaments einer Windenergieanlage**
Self-propelled heavy-load module transport vehicle for lifting and upright transporting of a tower of a wind energy assembly
Véhicule de transport modulaire de charge lourde automobile pour le levage et le transport vertical d'une tour d'éolienne

(43) Veröffentlichungstag der Anmeldung: 15.12.2010
(73) Patentinhaber: BARD Holding GmbH, 26725 Emden (DE)
(72) Erfinder: Beichelt, Lothar, 27476 Cuxhaven (DE)
(74) Vertreter: Manasse, Uwe

(56) Entgegenhaltungen:
- EP-A1- 1 321 670
- DE-A1-102005 036 641
- DE-A1-102005 048 455

## Beschreibung

Die vorliegende Erfindung betrifft ein selbstfahrendes Schwerlastmodultransportfahrzeug mit einer Ladefläche und einer Achsausgleichseinrichtung zur vorzugsweise hydraulischen Höhenverstellung der Ladefläche sowie ein mobiles Transportsystem und Verfahren zum Anheben und aufrechten Transportieren eines Fundaments einer Windenergieanlage, insbesondere einer Offshore-Windenergieanlage.

Dokument DE 10 2005 036 641 beschreibt ein Schwerlastmodultransportfahrzeug nach dem Oberbegriff des Anspruchs 1.

Zum Transportieren von Fundamenten von Windenergieanlagen, insbesondere von Offshore-Windenergieanlagen, sind heutzutage Kräne mit Tragkapazitäten von ca. 750 Tonnen für das Be- und Entladen besagter Fundamente auf und von Transportböcken erforderlich. Dies ist sehr kostenaufwendig.

Der Erfindung liegt somit die Aufgabe zugrunde, einen kostengünstigeren Transport von besagten Fundamenten zu ermöglichen.

Erfindungsgemäß wird diese Aufgabe gemäß einem ersten Aspekt gelöst durch ein selbstfahrendes Schwerlastmodultransportfahrzeug mit einer Ladefläche und einer Achsausgleichseinrichtung zur vorzugsweise hydraulischen Höhenverstellung der Ladefläche, wobei auf der Ladefläche ein Transportgestell zum aufrechten Transportieren eines Fundamentpfahls eines Fundaments einer Windenergieanlage, insbesondere einer Offshore-Windenergieanlage, vorzugsweise formschlüssig, befestigt ist.

Beispielsweise kann es sich bei dem selbstfahrenden Schwerlastmodultransportfahrzeug um ein Tiefladerfahrzeug bzw. Plattformfahrzeug handeln, die allerdings in einem ungekoppelten Fahrzeugverbund zentral steuerbar einen definierten Lenkradius abbilden müssen. Derartige Fahrzeuge (Schwerlastmodule, modulare Plattformwagen) stellen beispielsweise die Firmen Goldhofer AG, D-87700 Memmingen, und Scheuerle Fahrzeugfabrik GmbH, D-74629 Pfedelbach, her. Die Achsausgleichseinrichtung dient zum Niveauausgleich, wobei die hydraulische Höhenverstellung zum Heben und Senken der Fahrzeugladefläche mit oder ohne Last dient.

Gemäß einem weiteren Aspekt wird diese Aufgabe gelöst durch ein mobiles Transportsystem zum Anheben und aufrechten Transportieren eines Fundaments einer Windenergieanlage, insbesondere einer Offshore-Windenergieanlage, umfassend mindestens ein selbstfahrendes Schwerlastmodultransportfahrzeug nach einem der Ansprüche 1 bis 3.

Schließlich wird gemäß einem noch weiteren Aspekt der Erfindung diese Aufgabe gelöst durch ein Verfahren zum Anheben und aufrechten Transportieren eines Fundaments einer Windenergieanlage, insbesondere einer Offshore-Windenergieanlage, unter Verwendung von einem Transportsystem nach einem der Ansprüche 4 bis 8, umfassend die Schritte: a) Heranfahren eines selbstfahrenden Schwerlastmodultransportfahrzeugs nach einem der Ansprüche 1 bis 3 an einen Fundamentpfahl eines Fundaments, wobei die Ladefläche des Schwerlastmodultransportfahrzeugs bereits auf die niedrigste Höhe abgesenkt ist oder danach wird, b) Befestigen der Schelle des Schwerlastmodultransportfahrzeugs an dem Fundamentpfahl (200) im aufrechten Zustand, c) Wiederholen der Schritte a) - b) für jeden weiteren Fundamentpfahl, d) Synchrones Anheben der Fundamentpfähle durch Anheben der Ladeflächen der Schwerlastmodultransportfahrzeuge, und e) Transportieren des Fundaments mittels gesteuerten Verfahren der Schwerlastmodultransportfahrzeuge.

Bei dem selbstfahrenden Schwerlastmodultransportfahrzeug kann vorgesehen sein, dass das Transportgestell eine Befestigungseinrichtung zum lösbaren und vorzugsweise formschlüssigen Befestigen eines Fundamentpfahls an dem Transportgestell aufweist. Dadurch sind keine zusätzlichen Anschweißelemente erforderlich.

Günstigerweise umfasst die Befestigungseinrichtung eine Schelle. Diese kann zum Beispiel mittels eines Schließbolzens um einen Fundamentpfahl formschlüssig befestigbar sein.

Gemäß einer besonderen Ausführungsform des mobilen Transportsystems kann es mindestens zwei selbstfahrende Schwerlastmodultransportfahrzeuge umfassen.

Vorteilhafterweise umfasst es eine Fernsteuerung zur, vorzugsweise zeitlich synchronen, Steuerung der Schwerlastmodultransportfahrzeuge. Mit anderen Worten werden die Schwerlastmodultransportfahrzeuge mittels der Fernsteuerung im gekoppelten Zustand synchron gesteuert.

In einer weiteren besonderen Ausführungsform umfasst das mobile Transportsystem genau drei selbstfahrende Schwerlastmodultransportfahrzeuge.

Schließlich kann vorgesehen sein, dass das mobile Transportsystem zum Transportieren eines dreibeinigen Fundaments, insbesondere eines Tripiles, ausgebildet ist. Insbesondere kann es sich bei dem Fundament um ein Fundament gemäß dem deutschen Gebrauchsmuster DE 20 2004 020 720 U1 der Anmelderin handeln.

Der Erfindung liegt die überraschende Erkenntnis zugrunde, dass durch die Ausnutzung der Achsausgleichseinrichtung (vorzugsweise hydraulisches Fahrwerk) eines selbstfahrenden Schwerlastmodultransportfahrzeugs und durch die Verwendung eines Transportgestells ein Anheben und Transportieren eines Fundaments einer Windenergieanlage weder ein teurer Kran noch ein schienengebundenes bzw. spurgeführtes Transportsystem erforderlich ist. Es wird der vorzugsweise hydraulische Hub der Achsausgleichseinrichtung von beispielsweise ca. 400 mm genutzt, um die Last, das heißt das Fundament, mittels angedockter Transportgestelle vom Boden anzuheben und über dem Boden in einer technischen Transporthöhe von beispielsweise ca. 200 mm zu verfahren. Zudem lässt sich die Transportdauer um bis zu ca. 30% verkürzen.

Weitere Merkmale und Vorteile der Erfindung ergeben sich aus den Ansprüchen und der nachstehenden Beschreibung, in der ein Ausführungsbeispiel anhand der schematischen Zeichnungen im einzelnen erläutert ist. Dabei zeigt:
- Figur 1: eine perspektivische Ansicht von einem selbstfahrenden Schwerlastmodultransportfahrzeug gemäß einer besonderen Ausführungsform der Erfindung im Einsatz;
- Figur 2: eine perspektivische Ansicht von einem mobilen Transportsystem gemäß einer besonderen Ausführungsform der Erfindung mit drei selbstfahrenden Schwerlastmodultransportfahrzeugen gemäß Figur 1; und
- Figur 3: das Transportsystem von Figur 2 in einem fortgeschrittenen Einsatzstadium.

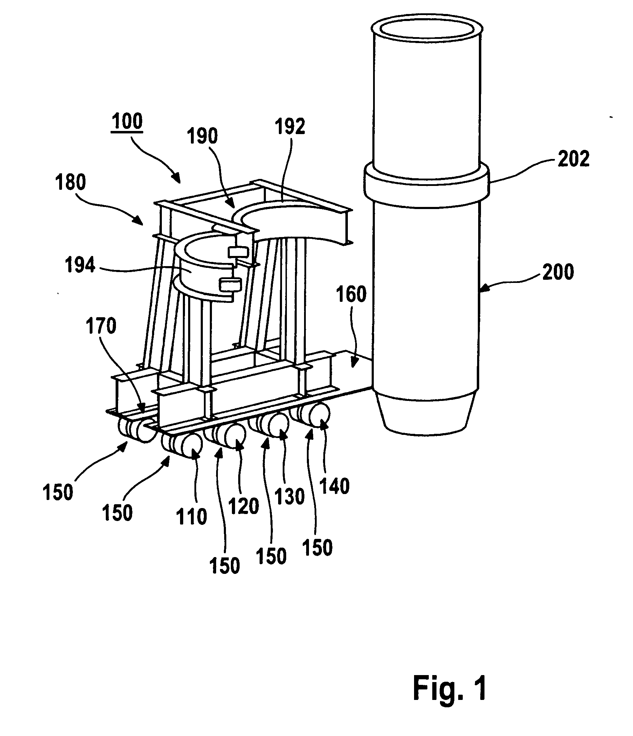

Das in Figur 1 gezeigte selbstfahrende Schwerlastmodultransportfahrzeug 100 weist vier Achsen 110, 120, 130 und 140 jeweils mit Doppelrädern, von denen einige sichtbar und mit der Bezugszahl 150 gekennzeichnet sind, sowie ein lediglich schematisch dargestelltes Antriebsaggregat 160 auf. Auf der Ladefläche 170 des Schwerlastmodultransportfahrzeugs 100 ist ein Transportgestell 180 formschlüssig befestigt.

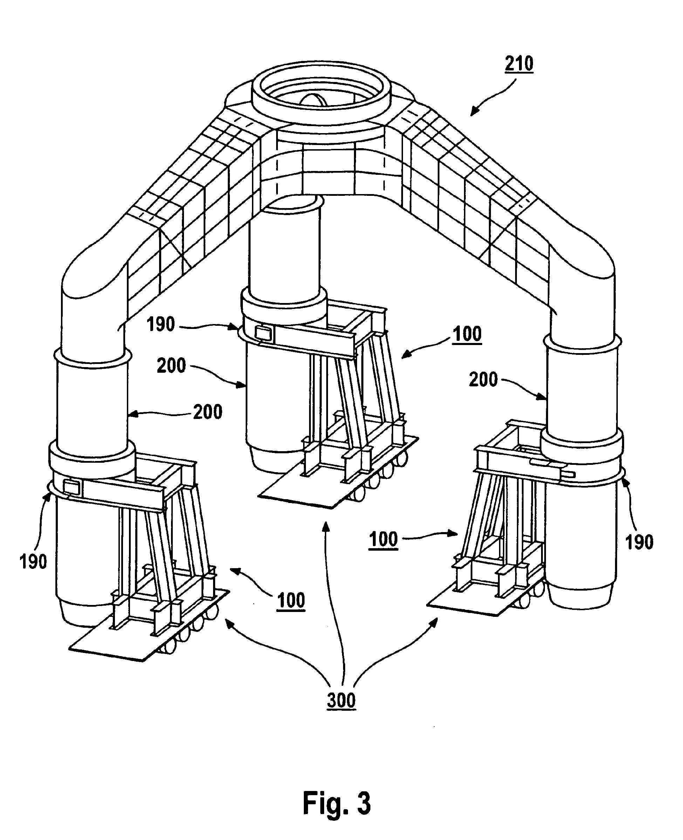

Die Konstruktion des Transportgestells besteht aus miteinander verschweißten Stahlprofilen, die die Kräfte aus Last, Wind und Fahrdynamik auf die Ladefläche 170 der Schwerlastmodultransportfahrzeuge 100 einleiten. Im oberen Bereich weist das Transportgesell 180 eine zweiteilige Schelle 190 auf, wobei ein Teil, nämlich 192, der Schelle in dem Transportgestell 180 ortsfest ist und der andere Teil, nämlich 194 relativ zum Teil 192 schwenkbar ist. Durch den Teil 194 lässt sich die Schelle 190 öffnen und schließen. Zudem ist die Schelle 190 so angeordnet, dass ein Fundamentpfahl 200 aufrecht und seitlich vom Transportgestell 180 in der Schelle 190 aufnehmbar ist. Anders ausgedrückt, lässt sich das Transportgestell 180 an dem Fundamentpfahl 200 mittels der Schelle 190 formschlüssig befestigen. Dazu weist die Schelle 190 Schließbolzen (nicht gezeigt) auf. Im vorliegenden Fall weist der Fundamentpfahl 200 eine äußere Ringschulter 202 auf, die alleine oder zusätzlich ein Durchrutschen des Fundamentpfahls 200 durch die Schelle 190 nach unten verhindert (siehe auch Figur 3).

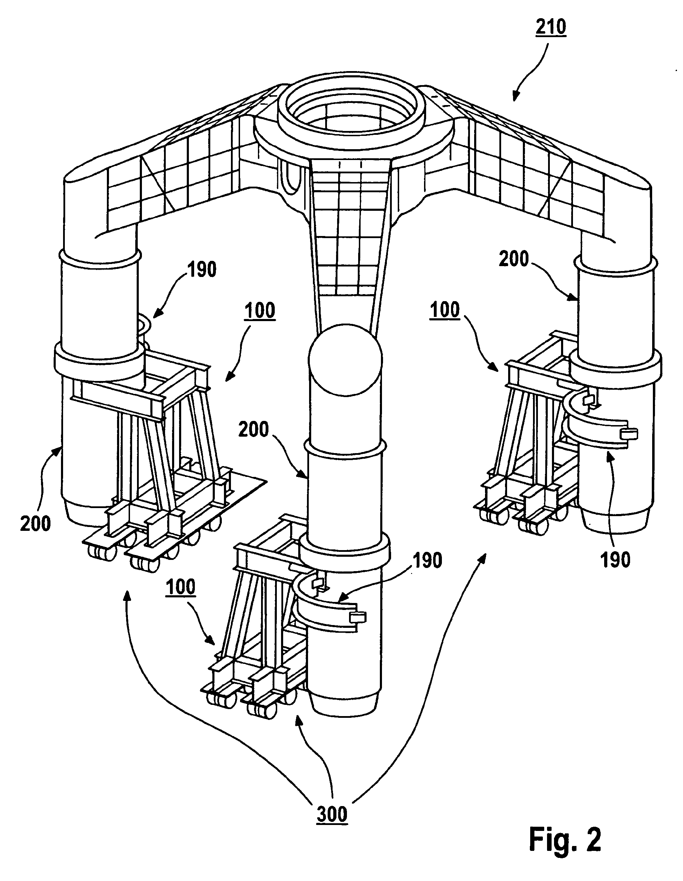

In Figur 1 wird das Schwerlastmodultransportfahrzeug 100 gerade an den Fundamentpfahl 200 herangefahren. Figur 2 zeigt ein Stadium, in dem drei Schwerlastmodultransportfahrzeuge 100 gemäß Figur 1, die Komponenten eines mobilen Transportsystems 300 sind, bereits an die drei Fundamentpfähle 200 eines Fundaments 210 herangefahren, die Schellen 190 aber noch offen sind. Das Heranfahren kann nacheinander oder gleichzeitig erfolgen.

In Figur 3, die das Fundament 210 aus einer gegenüber der Figur 2 entgegengesetzten Richtung zeigt, sind bereits alle drei Fundamentpfähle 200 mittels der Schellen 190 an dem jeweiligen Transportgestell 180 befestigt. Jedes der Schwerlastmodultransportfahrzeuge 100 weist eine hydraulische Achsausgleichseinrichtung (nicht gezeigt) auf, die beim Anheben des Fundaments 210 zum Einsatz kommt. Zum Befestigen der Schellen 190 an den Fundamentpfählen 200 wird die Ladefläche 170 (siehe Figur 1) mittels der hydraulischen Achsausgleichseinrichtung in die unterste Position gefahren. Nachdem die Fundamentpfähle befestigt sind, wird bzw. werden die hydraulischen Ausgleichseinrichtung(en) zum Anheben der Ladefläche auf eine technische Transporthöhe von ca. 200 mm verwendet. Das Anheben erfolgt dabei im Koppelbetrieb. Mit anderen Worten werden die drei Schwerlastmodultransportfahrzeuge 100 unter Verwendung einer zentralen Steuerung (nicht gezeigt), die Bestandteil des mobilen Transportsystems 300 ist, mittels Funkfernsteuerung oder mittels Steuerkabel zum synchronen Anheben angesteuert. Über einen Zentralrechner (nicht gezeigt), ebenfalls Bestandteil des mobilen Transportsystems 300, werden alle Achsen 110, 120, 130 und 140 der Schwerlastmodultransportfahrzeuge separat angesteuert und die Lenkvorgänge für jede Achse aller Schwerlastmodultransportfahrzeuge 100 gleichzeitig ausgeführt.

Nach erfolgtem Transport des Fundaments 210 werden die Ladeflächen der Schwerlastmodultransportfahrzeuge wieder abgesenkt, die Schellen 190 von den Fundamentpfählen 200 abgenommen und die Schwerlastmodultransportfahrzeuge 100 mit den Transportgestellen 180 abgefahren.

Vorteilhafterweise beträgt die Höhenverstellbarkeit der Ladefläche ± 300 mm.

## Patentansprüche

1. Selbstfahrendes Schwerlastmodultransportfahrzeug (100) mit einer Ladefläche (170) und einer Achsausgleicheinrichtung zur vorzugsweise hydraulischen Höhenverstellung der Ladefläche, **dadurch gekennzeichnet, dass** auf der Ladefläche (170) ein Transportgestell (180) zum aufrechten Transportieren eines Fundamentpfahls (200) eines Fundaments (210) einer Windenergieanlage, insbesondere einer Offshore-Windenergieanlage, vorzugsweise formschlüssig, befestigt ist.

2. Schwerlastmodultransportfahrzeug (100) nach Anspruch 1, **dadurch gekennzeichnet, dass** das Transportgestell (180) eine Befestigungseinrichtung zum lösbaren und vorzugsweise formschlüssigen Befestigen eines Fundamentpfahls (200) an dem Transportgestell (180) aufweist.

3. Schwerlastmodultransportfahrzeug (100) nach Anspruch 2, **dadurch gekennzeichnet, dass** die Befestigungseinrichtung eine Schelle (190) umfasst.

4. Mobiles Transportsystem (300) zum Anheben und aufrechten Transportieren eines Fundaments (210) einer Windenergieanlage, insbesondere einer Offshore-Windenergieanlage, umfassend mindestens ein selbsfahrendes Schwerlastmodultransportfahrzeug (100) nach einem der vorangehenden Ansprüche.

5. Transportsystem (300) nach Anspruch 4, **dadurch gekennzeichnet, dass** es mindestens zwei selbstfahrende Schwerlastmodultransportfahrzeuge (100) nach einem der Ansprüche 1 bis 3 umfasst.

6. Transportsystem (300) nach Anspruch 5, **dadurch gekennzeichnet, dass** es eine Fernsteuerung zur, vorzugsweise zeitlich synchronen, Steuerung der Schwerlastmodultransportfahrzeuge (100) umfasst.

7. Transportsystem nach Anspruch 5 oder 6, **dadurch gekennzeichnet, dass** es genau drei selbstfahrende Schwerlastmodultransportfahrzeuge (100) nach einem der Ansprüche 1 bis 3 umfasst.

8. Transportsystem nach Anspruch 7, **dadurch gekennzeichnet, dass** es zum Transportieren eines dreibeinigen Fundaments (210), insbesondere eines Tripiles, ausgebildet ist.

9. Verfahren zum Anheben und aufrechten Transportieren eines Fundaments (210) einer Windenergieanlage, insbesondere einer Offshore-Windenergieanlage, unter Verwendung von einem Transportsystem (300) nach einem der Ansprüche 5 bis 8, umfassend die Schritte:
a) Heranfahren eines selbstfahrenden Schwerlastmodultransportfahrzeugs (100) nach einem der Ansprüche 1 bis 3 an einen Fundamentpfahl (200) eines Fundaments (210), wobei die Ladefläche (170) des Schwerlastmodultransportfahrzeugs (100) bereits auf die niedrigste Höhe abgesenkt ist oder danach wird,
b) Befestigen der Schelle (190) des Schwerlastmodultransportfahrzeugs (100) an dem Fundamentpfahl (200) im aufrechten Zustand,
c) Wiederholen der Schritte a) - b) für jeden weiteren Fundamentpfahl (200),
d) synchrones Anheben der Fundamentpfähle (200) durch Anheben der Ladeflächen (170) der Schwerlastmodultransportfahrzeuge (100), und
e) Transportieren des Fundaments (210) mittels gesteuerten Verfahren der Schwerlastmodultransportfahrzeuge (100).

## Claims

1. Self-propelled heavy-load module transport vehicle (100) with a loading area (170) and an axial compensator for preferably hydraulic height adjustment of the loading area, **characterised in that** a transport frame (180) is fastened on the loading area (170), preferably in a positive-fit manner, for upright transportation of a tower pole (200) of a tower (210) of a wind energy plant, in particular an offshore wind energy plant.

2. Heavy-load module transport vehicle (100) according to claim 1, **characterised in that** the transport frame (180) exhibits a fastening unit for releasable and preferably positive fastening of a tower pole (200) to the transport frame (180).

3. Heavy-load module transport vehicle (100) according to claim 2, **characterised in that** the fastening unit exhibits a bracket (190).

4. Mobile transport system (300) for lifting and upright transporting of a tower (210) of a wind energy plant, in particular an offshore wind energy plant, comprising at least one self-propelled heavy-load module transport vehicle (100) according to one of the preceding claims.

5. Transport system (300) according to claim 4, **characterised in that** it comprises at least two self-propelled heavy-load module transport vehicles (100) according to one of the claims 1 to 3.

6. Transport system (300) according to claim 5, **characterised in that** it comprises a remote control for preferably time-synchronous control of the heavy-load module transport vehicles (100).

7. Transport system according to claim 5 or 6, **characterised in that** comprises exactly three self-propelled heavy-load module transport vehicles (100) according to one of the claims 1 to 3.

8. Transport system according to claim 7, **characterised in that** it is designed for transporting a tripod tower (210), in particular a tripile.

9. Method for lifting and upright transporting of a tower (210) of a wind energy plant, in particular an offshore wind energy plant, using a transport system (300) according to one of the claims 5 to 8, comprising the following steps:
a) approaching a self-propelled heavy-load module transport vehicle (100) according to one of the claims 1 to 3 to a tower pole (200) of a tower (210), wherein the loading area (170) of the heavy-load module transport vehicle (100) already is or will then be lowered the lowest height,
b) attaching the bracket (190) of the heavy-load module transport vehicle (100) to the tower pole (200) in its upright condition,
c) repeating the steps a) - b) for each further tower pole (200),
d) synchronous lifting of the tower poles (200) by lifting the loading areas (170) of the heavy-load module transport vehicles (100), and
e) transporting the tower (210) by means of controlled movement of the heavy-load module transport vehicles (100).

## Revendications

1. Véhicule modulaire automobile pour le transport de charges lourdes (100) avec une surface de chargement (170) et un dispositif d'équilibrage d'axe pour le réglage de hauteur, préférentiellement hydraulique, de la surface de chargement, **caractérisé en ce qu'**un châssis de transport (180) est fixé, préférentiellement par correspondance de forme, sur la surface de chargement (170) pour le transport vertical d'un pilot (200) de la fondation (210) d'une éolienne, en particulier d'une éolienne offshore.

2. Véhicule modulaire pour le transport de charges lourdes (100) selon la revendication 1, **caractérisé en ce que** le châssis de transport (180) comporte un dispositif de fixation pour la fixation amovible, préférentiellement par correspondance de forme, d'un pilot de fondation (200) sur le châssis de transport (180).

3. Véhicule modulaire pour le transport de charges lourdes (100) selon la revendication 2, **caractérisé en ce que** le dispositif de fixation comprend un collier (190).

4. Système de transport mobile (300) pour le levage et le transport vertical d'une fondation (210) d'une éolienne, en particulier d'une éolienne offshore, comprenant au moins un véhicule modulaire automobile pour le transport de charges lourdes (100) selon l'une des revendications précédentes.

5. Système de transport (300) selon la revendication 4, **caractérisé en ce qu'**il comprend au moins deux véhicules modulaires automobiles pour le transport de charges lourdes (100) selon l'une des revendications 1 à 3.

6. Système de transport (300) selon la revendication 5, **caractérisé en ce qu'**il comprend une télécommande pour la commande, préférentiellement synchrone, des véhicules modulaires pour le transport de charges lourdes (100).

7. Système de transport selon la revendication 5 ou la revendication 6, **caractérisé en ce qu'**il comprend exactement trois véhicules modulaires automobiles pour le transport de charges lourdes (100) selon l'une des revendications 1 à 3.

8. Système de transport selon la revendication 7, **caractérisé en ce qu'**il est prévu pour le transport d'une fondation (210) tripode, en particulier d'une fondation Tripile.

9. Procédé de levage et de transport vertical d'une fondation (210) d'une éolienne, en particulier d'une éolienne offshore, recourant à un système de transport (300) selon l'une des revendications 5 à 8, comprenant les étapes suivantes :
a) rapprochement du véhicule modulaire automobile pour le transport de charges lourdes (100) selon l'une des revendications 1 à 3 contre un pilot (200) d'une fondation (210), la surface de chargement (170) du véhicule modulaire pour le transport de charges lourdes (100) ayant été préalablement abaissée ou allant être consécutivement abaissée à sa hauteur minimale,
b) fixation du collier (190) du véhicule modulaire pour le transport de charges lourdes (100) sur le pilot de fondation (200) en état vertical,
c) répétition des étapes a) - b) pour chaque autre pilot de fondation (200),
d) levage synchrone des pilots de fondation (200) par soulèvement des surfaces de chargement (170) des véhicules modulaires pour le transport de charges lourdes (100), et
e) transport de la fondation (210) par déplacement commandé des véhicules modulaires pour le transport de charges lourdes (100).
